# EUROPÄISCHE PATENTSCHRIFT

(11) **EP 1 121 815 B1**
(45) Veröffentlichungstag und Bekanntmachung des Hinweises auf die Patenterteilung: **28.07.2004**
(21) Anmeldenummer: 99953720.2
(22) Anmeldetag: 09.09.1999
(51) Int. Cl.: H04Q 3/00, H04Q 3/545

(54) **VERFAHREN ZUR FERNÜBERTRAGUNG VON BINÄREN DATEN**
METHOD FOR TRANSMITTING BINARY DATA
PROCEDE DE TELETRANSMISSION DE DONNEES BINAIRES

(30) Priorität: 13.10.1998 DE 19847022
(43) Veröffentlichungstag der Anmeldung: 08.08.2001
(73) Patentinhaber: Tenovis GmbH & Co. KG, 60362 Frankfurt am Main (DE)
(72) Erfinder: FRITZ, Norbert, D-85244 Röhrmoos (DE); PYTLAK, Andrzey, D-81547 München (DE); BARCZYK, Tomasz, P-Krakow (PL)
(74) Vertreter: Bohnenberger, Johannes, Dr.
(86) Internationale Anmeldenummer: PCT/DE1999/002852
(87) Internationale Veröffentlichungsnummer: WO 2000/022838

(56) Entgegenhaltungen:
- WO-A-97/30555
- DE-A- 4 435 130
- GB-A- 2 200 816

## Beschreibung

Die Erfindung betrifft ein Verfahren zur Fernübertragung von binären Daten über eine digitale Punkt-zu-Punkt-Verbindung mit den im Oberbegriff des Anspruchs 1 genannten Merkmalen.

### Stand der Technik

Es ist bekannt, über eine Übertragungsstrecke, beispielsweise eine ISDN(integrated services digital network)-Leitung, eine Punkt-zu-Punkt-Verbindung aufzubauen. Über diese ISDN-Verbindungen können Informationen und/oder Daten zwischen zwei Teilnehmern übertragen werden.

Es ist bekannt, bei Telekommunikationssystemen programmierbare Telekommunikationsanlagen einzusetzen. Diese, in der Regel bei einem Verbraucher eingesetzten programmierbaren Telekommunikationsanlagen unterstützen ein verbraucherseitiges Management des Informations- und/oder Datenaustausches. Um neuere Entwicklungen bei der Programmierung der Telekommunikationsanlagen zu berücksichtigen, ist bekannt, diese mit einem sogenannten Backup zu aktualisieren. Hierzu wird beispielsweise von einer zentralen Servicestation die neue Software der programmierbaren Telekommunikationsanlagen über eine geschaltete Verbindung über die bestehende Übertragungsstrecke übertragen. Solch ein Verfahren ist aus der Druckschrift WO-A-9730555 bekannt, darin werden von einer Servicestation Programme zu einer Vermittlungs plattform übertragen. Entsprechend dem Umfang der zu übertragenden Software wird hierbei eine entsprechende Kapazität, sowohl hinsichtlich der Dauer als auch hinsichtlich der Übertragungsrate, benötigt. Üblicherweise handelt es sich bei der Übertragung der zu aktualisierenden Software um binäre Daten, die Programmcodes zwischen einem und zwei MByte aufweisen. Bekannte programmierbare Telekommunikationsanlagen verfügen über einen Aktualisierungs(Backup)-Speicher von 1,5 MByte. Hierbei besteht das Problem, daß somit gegebenenfalls nicht die zu aktualisierende Software mit einem Übertragungsvorgang übertragen werden kann. Diese ist entsprechend der zur Verfügung stehenden Speicherkapazität in der Telekommunikationsanlage schrittweise zu übertragen. Hierdurch ergeben sich relativ hohe Kosten, die durch die Nutzung der Übertragungsstrecke zwischen der Servicestation und der Telekommunikationsanlage anfallen. Die andere Alternative, nämlich den Aktualisierungsspeicher der Telekommunikationsanlage aufzurüsten, ist sehr kostenintensiv.

Bei der Übertragung von Daten von einem ersten Datenträger auf einen zweiten Datenträger ist bekannt, diese zu komprimieren. Eine Kompression ist z.B. aus der Druckschrift DE-A-4 435 130 bekannt. Hierdurch lassen sich Dateien in ihrem Umfang reduzieren, ohne daß Informationen verloren gehen. Bekannterweise erfolgt die Komprimierung, indem die zu komprimierende Datei vor ihrer Komprimierung analysiert wird. Wird beispielsweise eine Serie gleicher Zeichen festgestellt, werden diese gleichen Zeichen durch eine entsprechende Wiederholinformation ersetzt, so daß sich der Gesamtumfang der zu übertragenden Daten entsprechend reduziert.

### Vorteile der Erfindung

Das erfindungsgemäße Verfahren mit den im Anspruch 1 genannten Merkmalen bietet den Vorteil, daß die Fernübertragung der binären Daten beim Service von Telekommunikationsanlagen unter Einsparung einer Übertragungskapazität erfolgen kann. Dadurch, daß die binären Daten in der Servicestation komprimiert werden, die komprimierten Daten zu der Telekommunikationsanlage übertragen werden und in der Telekommunikationsanlage dekomprimiert werden, läßt sich entsprechend einem erzielten Komprimierungsgrad, der vorzugsweise 50 % beträgt, die zu übertragende Datenmenge entsprechend reduzieren. Hierdurch wird bei der Fernübertragung dieser reduzierten Datenmenge eine entsprechende Einsparung an Übertragungszeit erreicht, die zu einer Kostenreduktion führt. Ferner ist vorteilhaft, daß ein vorhandener Speicher in der Telekommunikationsanlage eine größere Anzahl von Daten, nämlich in komprimierter Form, gleichzeitig empfangen kann. Hierdurch wird vermieden, daß die Übertragung der Daten schubweise erfolgen muß oder eine entsprechende Nachrüstung der Telekommunikationsanlage mit entsprechend größeren Speichereinheiten erfolgen muß.

Die Erfindung sicht vor, daß die Komprimierung der binären Daten erfolgt, indem die Daten mit einem gleitenden Fenster abgetastet werden, das eine bestimmte Datenmenge, insbesondere 256 Byte, erfaßt. Diesem gleitenden Fenster ist ein Vorschaupuffer vorgeschaltet, der die unmittelbar vor dem gleitenden Fenster liegenden binären Daten erfaßt und insbesondere eine Größe von 9 Byte aufweist. Die Zeichen in dem Vorschaupuffer sowie in dem Gleitfenster vorhandene Zeichen werden auf Übereinstimmung überprüft und bei entsprechender Übereinstimmung codiert, so daß lediglich der Code als komprimiertes Signal zu übertragen ist. Durch eine derartig durchgeführte Datenkomprimierung läßt sich eine sehr exakte, das heißt ohne Datenverlust durchführbare Komprimierung in einfacher Weise erreichen, die insbesondere für die Komprimierung von Anpassungssoftware für programmierbare Telekommunikationsanlagen geeignet ist, und die über bestehende Übertragungsstrecken (digitale Amtsleitungen) übertragbar ist.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Übersicht für die Fernübertragung binärer Daten und
- Figuren 2 bis 4: schematische Ansichten der Komprimierung binärer Daten.

### Beschreibung des Ausführungsbeispiels

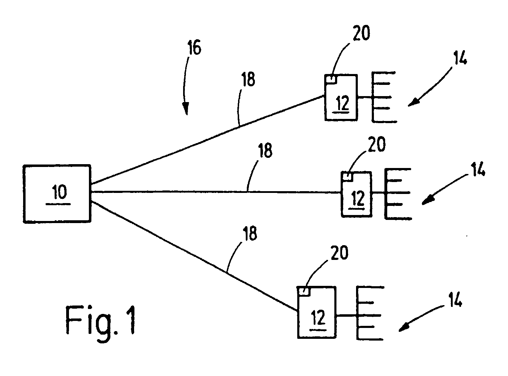

Figur 1 zeigt in einer schematischen Übersicht die prinzipielle Fernübertragung von binären Daten. Hierbei ist eine zentrale Servicestation 10 vorhanden, die an einem festen, bekannten Ort eingerichtet ist. Über diese Servicestation 10 werden dezentrale programmierbare Telekommunikationsanlagen 12 betreut. Diese Telekommunikationsanlagen 12 sind über ein Territorium beliebig angeordnet, je nachdem welche Verbraucher eine Telekommunikationsanlage 12 besitzen, die von der Servicestation 10 betreut werden sollen. Die Telekommunikationsanlagen 12 dienen in der Regel dazu, ein verbraucherseitiges, hier lediglich durch Verzweigungen angedeutetes Telekommunikationsnetz 14 zu administrieren. Über eine bekannte Kennung, insbesondere Telefonnummer, kann von der Servicestation 10 jede der Telekommunikationsanlagen 12 gerufen werden. Hierbei baut sich eine verbindung 16 über eine bestehende Übertragungsstrecke 18, die beispielsweise von einem ISDN-Schmalbandnetz gebildet ist, auf. Bei aufgebauter Verbindung besteht somit eine Punkt-zu-Punkt-Verbindung zwischen der Servicestation 10 und der jeweils angewählten Telekommunikationsanlage 12. Die Telekommunikationsanlagen 12 sind programmierbar und weisen einen hier lediglich angedeuteten Speicher 20 auf, der beispielsweise 1,5 MByte beträgt und der zum Zwischenspeichern von Aktualisierungssoftware (Update) dient, die von der Servicestation 10 bereitgestellt werden soll. Die Funktion, die Aufgabenverteilung und die Fernübertragung von Software zwischen der Servicestation 10 und den Telekommunikationsanlagen 12 sind an sich bekannt, so daß im Rahmen der vorliegenden Beschreibung hierauf nicht näher eingegangen werden soll. Es ist selbstverständlich, daß die Servicestation 10 und die Telekommunikationsanlagen 12 hierzu eine entsprechende hardwaremäßige und softwaremäßige Ausstattung aufweisen.

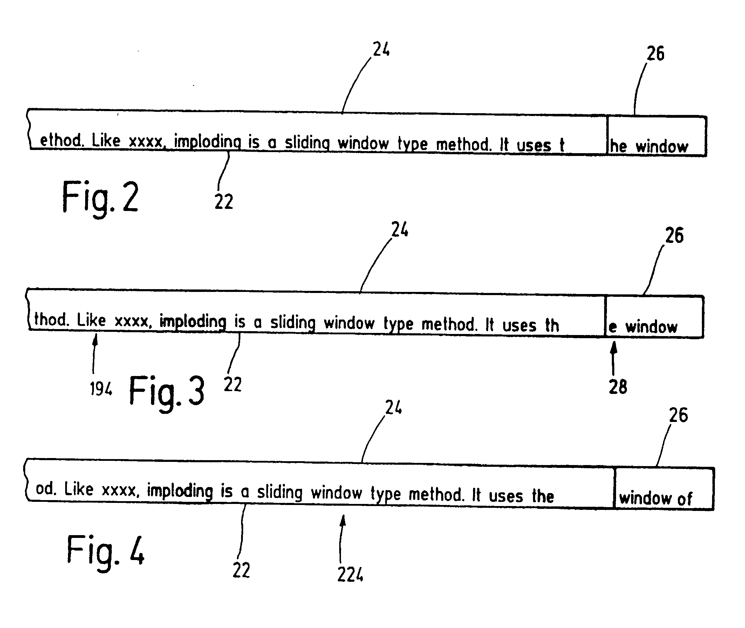

Anhand der Figuren 2 bis 4 wird die erfindungsgemäß vorgesehene Komprimierung der zu übertragenden binären Daten verdeutlicht. Im Beispiel wird davon ausgegangen, daß eine Zeichenkette zu übertragen ist, die ausschnittsweise lautet: "...ethod. Like XXXX, imploding is a sliding window type method. It uses the window of...". In den Figuren 2 bis 4 ist diese Zeichenkette jeweils mit 22 bezeichnet. Die zu komprimierende Zeichenkette wird mit einem Gleitfenster 24 sowie einem Vorschaupuffer 26 abgetastet. Das Gleitfenster 24 und der Vorschaupuffer 26 haben eine konstante Größe, wobei die Größe sowohl des Gleitfensters 24 als auch des Vorschaupuffers 26 entsprechend der zu übertragenden Zeichenketten anpaßbar ist. Das heißt, diese sind skalierbar und den speziellen Verwendungszwecken anpaßbar. So kann das Gleitfenster beispielsweise eine Standardgröße von 256 Byte und der Vorschaupuffer eine Standardgröße von 9 Byte besitzen. Das Gleitfenster 24 kann selbstverständlich auch andere Größen, die > 1 Byte sind, aufweisen. Der Vorschaupuffer 26 kann beispielsweise eine Größe von 9, 17 oder 33 Byte aufweisen.

Jedes der Zeichen der zu codierenden beziehungsweise zu komprimierenden Zeichenfolge belegt ein Byte, das in bekannter Weise aus 8 Bit besteht. Das Gleitfenster 24 wird nunmehr entsprechend seiner Größe über die Zeichenfolge gelegt, so daß entsprechend der Größe des Gleitfensters 24 eine entsprechende Anzahl von Bytes der Zeichenfolge in diesen abgebildet sind. Unmittelbar an das Gleitfenster 24 schließt sich der Vorschaupuffer 26 an.

Zur Durchführung des Verfahrens wird nunmehr die im Vorschaupuffer 26 abgebildete Zeichenkette mit den im Gleitfenster 24 abgebildeten Zeichenketten verglichen. Gemäß der Darstellung in Figur 2 ist keine Übereinstimmung der Zeichenkette "he window" in dem dargestellten Teil des Gleitfensters 24 vorhanden. Für den Fall, daß keine Übereinstimmung vorliegt, wirft das Komprimierungsprogramm als Bitfolge "001101000" aus, wobei dies der Wiedergabe von "0,h" entspricht, entsprechend der bekannten ASCII-Darstellung des Zeichens h. Anschließend werden das Gleitfenster 24 und der Vorschaupuffer 26 um 1 Byte verschoben, so daß sich die in Figur 3 gezeigten Zeichenketten im Gleitfenster 24 und im Vorschaupuffer 26 ergeben. Dieses hat nun die Zeichenkette "e window". Das Komprimierungsprogramm sucht nunmehr wiederum Übereinstimmungen zwischen der Zeichenkette des Vorschaupuffers 26 mit der Zeichenkette des Gleitfensters 24. Hierbei gibt es Übereinstimmung zwischen dem ersten Byte 28 des Vorschaupuffers 26 und dem 194. Byte des Gleitfensters 24. Entsprechend dem dem Zeichen "e" folgenden Leerzeichen stimmen die ersten beiden Zeichen des Vorschaupuffers 26 mit der Position 194 überein. Vom Komprimierungsprogramm wird nunmehr diese Angabe (2,194) als Bitfolge "100011000010" ausgegeben. Hierbei steht diese Bitfolge "1+(Länge-2)+Offset="1"+"000"+"11000010". Anschließend werden, da für die ersten beiden Zeichen des Vorschaupuffers 26 Übereinstimmung festgestellt wurde, das Gleitfenster 24 und der Vorschaupuffer 26 um zwei Zeichen verschoben, so daß sich die Situation gemäß Figur 4 ergibt.

Das Komprimierungsprogramm prüft nunmehr wieder auf Übereinstimmung zwischen der Zeichenfolge im Vorschaupuffer 26 mit der Zeichenfolge im Gleitfenster 24. Hierbei stimmen die ersten sieben Zeichen des Vorschaupuffers 26 "window " mit dem Zeichen 224 und den diesem folgenden sechs Zeichen des Gleitfensters 24 überein. Als Ausgabe erfolgt demnach (7,224). Die entsprechende Bitfolge lautet "110111100000". Hierbei ergibt sich wieder "1+(Länge-2)+Offset="1"+"101"+ "11100000". Im nächsten Schritt - der nicht dargestellt ist - wird nun das Gleitfenster 24 und der Vorschaupuffer 26 um sieben Byte verschoben. Dieses Überprüfen auf Übereinstimmung wiederholt sich, bis der gesamte zu komprimierende Datensatz entsprechend komprimiert ist.

Für die ausschnittsweise gezeigte Darstellung der Komprimierung der Zeichenfolge "he window" ergibt sich als Codierung mit dann 33 Bits "001101000100011000010110111100000". Dies entspricht 4 ⅛ Bytes. Somit ist die hier beispielhaft betrachtete Zeichenfolge "he window", die aus 9 Byte besteht, auf 4 ⅛ Byte komprimiert worden. Dies entspricht einer Komprimierungsrate von zirka 50 %.

Somit wird klar, daß mit einfachen Mitteln eine ausreichende Komprimierungsrate erreicht wird, die eine Datenfernübertragung zwischen der Servicestation 10 und einer der Telekommunikationsanlagen 12 gestattet, wobei dieses so angepaßt ist, daß bei einem vorhandenen Backup-Speicher 20 von 1,5 MByte Programmcodes zwischen einem und 2 MByte, wie diese typischerweise bei einer Fernsoftwareübertragung auftreten, ausreichend komprimiert werden können, so daß mit einer Übertragung und mit einem verringerten Zeitaufwand die Software übertragen werden kann. Die Telekommunikationseinrichtungen 12 besitzen ein entsprechendes Dekomprimierungsprogramm, so daß die komprimiert übertragenen Daten dort wieder entschlüsselt und dann entsprechend verarbeitet werden können. Die Dekomprimierung ist so ausgelegt, daß üblicherweise bei Telekommunikationsanlagen 12 vorhandene Arbeitsplatzspeicherbegrenzungen, die beispielsweise vier mal 256 Byte Speicherblöcke für Puffer, 10 KByte Code, 1 KByte Daten, 512 Byte Stack betragen, nicht überschritten werden.

Dieses anhand des Beispiels in den Figuren 2 bis 4 erläuterte Verfahren läßt sich wie folgt verallgemeinern:

Bei der Codierung der zu komprimierenden Zeichenketten des Vorschaupuffers 26 wird zunächst ein einzelnes Bit, entweder "0" oder "1", als Präfix gesetzt, wobei das Bit "0" dafür steht, daß ein einzelnes Datenbyte nachfolgt oder bei einem Präfix Bit "1", daß nachfolgend noch die Länge und ein Offset von mehreren Datenbytes übertragen werden. Dies bedeutet, wenn keine Übereinstimmung einer Zeichenkette des Vorschaupuffers 26 mit einer Zeichenkette des Gleitfensters 24 festgestellt wird, eine "0" ausgegeben wird, und dann das erste Zeichen des Vorschaupuffers 26.

Wenn n erste Zeichen des Vorschaupuffers 26, wobei für n gilt 1<n<10, mit einer Zeichenkette mit n Zeichen ab einer bestimmten Position P im Gleitfenster 24 übereinstimmt, wird als Präfix-Bit eine "1" ausgegeben. Anschließend wird die Länge der Zeichenkette, das heißt die Anzahl der übereinstimmenden Zeichen n - 2 angefügt. Diese Länge wird in 3 Bits codiert. Anschließend wird die Position P des ersten Zeichens der übereinstimmenden Zeichenkette im Gleitfenster 24 als Offset angehangen. Der Offset wird in 8 Bit codiert. Hierdurch ergibt sich für die gesamte Information 1 Bit (Präfix) + 3 Bit (Länge) + 8 Bit (Offset) = 12 Bit. Diese 12 Bit reichen aus, um eine Zeichenkette mit einer Länge zwischen 2 und 9 Bytes zu codieren.

Das Komprimierungsprogramm beziehungsweise das Dekomprimierungsprogramm können auf üblichen Benutzerebenen, beispielsweise einer DOS-Umgebung eines Rechners, laufen.

## Patentansprüche

1. Verfahren zur Fernübertragung von binären Daten über eine digitale Punkt-zu-Punkt-Verbindung zwischen einer Service-Station und wenigstens einer programmierbaren Telekommunikationsanlage, wobei als binäre Daten Software von der Servicestation zu der wenigstens einen Telekommunikationsanlage übertragen wird, und die übertragene Software in der wenigstens einen Telekommunikationsanlage gespeichert wird, **dadurch gekennzeichnet, daß** die binären Daten (22) in der Servicestation (10) komprimiert werden, die komprimierten Daten zu der wenigstens einen Telekommunikationsanlage (22) über wenigstens eine Übertragungsstrecke (18) übertragen werden und in der wenigstens einen Telekommunikationsanlage (12) dekomprimiert werden, wobei eine Zeichenkette der binären Daten (22) mit einem Gleitfenster (24) und einem dem Gleitfenster (24) vorgelagerten Vorschaupuffer (26) abgetastet wird und die folgenden Schritte ausgeführt werden:
(1) es werden Länge und Offset von mehreren zwischen dem Vorschaupuffer und dem Gleitfenster übereinstimmenden Datenbytes übertragen,
(2) es wird, wenn keine Übereinstimmung vorliegt, das erste Zeichen des Vorschaupuffers unkomprimiert übertragen,
(3) es werden das Gleitfenster und der Vorschaupuffer um die Anzahl der übereinstimmenden Datenbytes verschoben, und
(4) es werden, wenn keine Übereinstimmung vorliegt, das Gleitfenster und der Vorschaupuffer um 1 Byte verschoben.

2. Verfahren nach einem der vorhergehenden Ansprüche, **dadurch gekennzeichnet, daß** das Gleitfenster (24) und der Vorschaupuffer (26) konstante Größe haben.

3. Verfahren nach einem der vorhergehenden Ansprüche, **dadurch gekennzeichnet, daß** das Gleitfenster (24) eine Größe von > 1 Byte, insbesondere 256 Byte, besitzt.

4. Verfahren nach einem der vorhergehenden Ansprüche, **dadurch gekennzeichnet, daß** der Vorschaupuffer (26) eine Größe von 9, 17 oder 33 Byte aufweist.

5. Verfahren nach einem der vorhergehenden Ansprüche, **dadurch gekennzeichnet, daß** bei der Codierung einer Zeichenfolge des Vorschaupuffers (26) zunächst ein Präfix-Bit gesetzt wird, wobei Bit 0 bedeutet, daß ein Datenbyte folgt, und Bit 1 bedeutet, daß nachfolgend die Länge und ein Offset von mehreren zwischen Vorschaupuffer (26) und Gleitfenster (24) übereinstimmenden Datenbytes übertragen werden.

6. Verfahren nach einem der vorhergehenden Ansprüche, **dadurch gekennzeichnet, daß** bei n übereinstimmenden Zeichen zwischen dem Vorschaupuffer (26) und dem Gleitfenster (24), wobei 1<n<Größe des Vorschaupuffers (26) gilt, an ein Präfix-Bit die Anzahl der übereinstimmenden Zeichen minus 2 als Länge und die Position (P) des ersten Zeichens der übereinstimmenden Zeichenkette im Gleitfenster (24) als Offset angehangen werden.

7. Verfahren nach einem der vorhergehenden Ansprüche, **dadurch gekennzeichnet, daß** die Länge in drei Bit und der Offset in acht Bit codiert werden.

## Claims

1. A method of remote transmission of binary data via a digital point-to-point connection between a service station and at least one programmable telecommunications equipment, with software, as the binary data, being transmitted from the service station to the at least one telecommunications equipment, and the transmitted software being stored in the at least one telecommunications equipment, **characterized in that** the binary data (22) is compressed within the service station (10), the compressed data is transmitted to the at least one telecommunications equipment (12) via at least one transmission path (18) and is decompressed in the at least one telecommunications equipment (12), with a character string of the binary data (22) being scanned by means of a sliding window (24) and a preview buffer (26) upstream of the sliding window (24), and the following steps are carried out:
(1) the length and offset of several data bytes corresponding between the preview buffer and the sliding window are transmitted,
(2) if there exists no correspondence, the first character of the preview buffer is transmitted uncompressed;
(3) the sliding window and preview buffer are shifted by the number of corresponding data bytes, and
(4) if there exists no correspondence, the sliding window and preview buffer are shifted by 1 byte.

2. The method according to any one of the preceding claims, **characterized in that** the sliding window (24) and the preview buffer (26) have constant size.

3. The method according to any one of the preceding claims, **characterized in that** the sliding window (24) has a size of > 1 byte, in particular 256 bytes.

4. The method according to any one of the preceding claims, **characterized in that** the preview buffer (26) has a size of 9, 17 or 33 bytes.

5. The method according to any one of the preceding claims, **characterized in that** in coding a character string of the preview buffer (26), first a prefix bit is set, wherein bit 0 means that a data byte follows and bit 1 means that subsequently, the length and offset of several data bytes will be transmitted that correspond between the preview bit (26) and the sliding window (24).

6. The method according to any one of the preceding claims, **characterized in that** with n corresponding characters between the preview buffer (26) and the sliding window (24), wherein applies 1<n<size of the preview buffer (26), the number of the corresponding characters minus 2 as a length, and the position (P) of the first character of the corresponding character string being attached to a prefix bit in the sliding window (24) as an offset.

7. The method according to any one of the preceding claims, **characterized in that** the length is encoded in three bits and the offset in eight bits.

## Revendications

1. Procédé de transmission à distance de données binaires par une liaison numérique point à point entre une station de service et au moins une installation programmable de télécommunication, dans lequel, en tant que données binaires, un logiciel est transmis par la station de service à l'installation de télécommunication dont au moins une existe, et le logiciel transmis est stocké dans l'installation de télécommunication dont au moins une existe, **caractérisé en ce que** les données binaires (22) sont compressées dans la station de service (10), les données compressées sont transmises à l'installation de télécommunication (12) dont au moins une existe par au moins un trajet de transmission (18) et décompressées dans l'installation de télécommunication (12) dont au moins une existe, une chaîne de caractères des données binaires (22) étant examinée avec une fenêtre glissante (24) et un tampon de prévisualisation (26) figurant en amont de la fenêtre glissante (24) et que les étapes suivantes sont exécutées :
(1) la longueur et le décalage de plusieurs octets de données correspondants entre le tampon de prévisualisation et la fenêtre glissante sont transmis,
(2) lorsque aucune correspondance n'existe, le premier caractère du tampon de prévisualisation est transmis non compressé,
(3) la fenêtre glissante et le tampon de prévisualisation sont déplacés du nombre d'octets de données qui correspondent et
(4) lorsque aucune correspondance n'existe, la fenêtre glissante et le tampon de prévisualisation sont déplacés d'un octet.

2. Procédé selon l'une quelconque des revendications précédentes, **caractérisé en ce que** la fenêtre glissante (24) et le tampon de prévisualisation (26) ont une capacité constante.

3. Procédé selon l'une quelconque des revendications précédentes, **caractérisé en ce que** la capacité de la fenêtre glissante (24) est supérieure à 1 octet, atteint, en particulier, 256 octets.

4. Procédé selon l'une quelconque des revendications précédentes, **caractérisé en ce que** la capacité du tampon de prévisualisation (26) est de 9, 17 ou 33 octets.

5. Procédé selon l'une quelconque des revendications précédentes, **caractérisé en ce que,** lors du codage d'une suite de caractères du tampon de prévisualisation (26), un bit de préfixe est, dans un premier temps, défini, bit 0 signifiant qu'un octet de données suit et bit 1 signifiant qu'à la suite, la longueur et un décalage de plusieurs octets de données qui correspondent entre le tampon de prévisualisation (26) et la fenêtre glissante (24) sont transmis.

6. Procédé selon l'une quelconque des revendications précédentes, **caractérisé en ce que**, pour n caractères correspondants entre le tampon de prévisualisation (26) et la fenêtre glissante (24), avec 1<n<capacité du tampon de prévisualisation (26), à un bit de préfixe succèdent le nombre de caractères correspondants moins 2 en tant que longueur et, en tant que décalage, la position (P) du premier caractère de la chaîne de caractères correspondante dans la fenêtre glissante (24).

7. Procédé selon l'une quelconque des revendications précédentes, **caractérisé en ce que** la longueur est codée sur trois bits et le décalage sur huit bits.
